# EUROPÄISCHE PATENTANMELDUNG

(11) **EP 1 710 033 A2**
(43) Veröffentlichungstag der Anmeldung: **11.10.2006**
(21) Anmeldenummer: 06005122.4
(22) Anmeldetag: 14.03.2006
(51) Int. Cl.: B23B 31/20

(54) **Spannmutter**

(30) Priorität: 07.04.2005 DE 102005016161
(71) Anmelder: Robert Koch GmbH, 72469 Tieringen (DE)
(72) Erfinder: Koch, Robert, 72469 Tieringen (DE)
(74) Vertreter: Maser, Jochen

(57) **Zusammenfassung**

Die Erfindung betrifft eine Spannmutter zur auswechselbaren Aufnahme einer Spannzange (12) mit einem Ausziehlappen (21) zum Lösen der Spannzange (12) aus einer Spannzangenaufnahme, wobei dem Ausziehlappen (21) zumindest eine lösbare Rastverbindung (24) zur Fixierung der Spannzange (11) in einer Halteposition (19) zum Spannzangenaufnahmebereich (14) zugeordnet ist.

## Beschreibung

Die Erfindung betrifft eine Spannmutter zur auswechselbaren Aufnahme einer Spannzange mit einem Ausziehlappen zum Lösen der Spannzange aus einer Spannzangenaufnahme.

Aus der DIN 6499-B ist ein Spannzangensystem bekannt, bei dem eine Spannzange in eine Spannmutter eingeführt und gedreht wird, bis ein Exzenterring der Spannmutter in eine Rille oder Nut der Spannzange einrastet. Diese Spannzange weist den Vorteil auf, dass eine einfache und problemlose Handhabung gegeben ist. Nachteilig bei diesem System ist, dass die Spannzange zum Einführen eines Werkzeuges und anschließend zum Einspannen in die Werkzeug- beziehungsweise Spannzangenaufnahme gehalten werden muss, da ansonsten die Spannzange aus der Spannmutter herauskippt.

Eine Weiterbildung dieser Spannmutter sieht vor, dass die Spannzangenaufnahme derart ausgebildet ist, dass nach dem Einsetzen der Spannzange am Exzenterring beziehungsweise Ausziehlappen durch eine Kippbewegung zur Spannmutter positioniert wird, bis die Spannzange in der Spannmutter einrastet. Dadurch wird die Spannzange vollständig in der Spannmutter gehalten. Nachteilig bei dieser Ausführungsform ist jedoch, dass ausschließlich Spannzangen eingesetzt werden können, welche elastisch ausgebildet sind.

Der Erfindung liegt deshalb die Aufgabe zugrunde, eine Spannmutter zu schaffen, welche ein einfaches Einsetzen und Lösen einer Spannzange in und aus der Spannmutter und eine selbsthaltende Aufnahme von unterschiedlichen Spannzangenarten ermöglicht.

Diese Aufgabe wird erfindungsgemäß durch die Spannmutter gemäß den Merkmalen des Anspruchs 1 gelöst.

Durch die Ausgestaltung von zumindest einer lösbaren Rastverbindung, die dem zumindest einen Ausziehlappen in der Spannmutter zugeordnet ist, wird ermöglicht, dass die Spannzange nach Einnahme einer Halteposition zur Spannmutter gehalten ist. Durch die lösbare Rastverbindung kann auch eine einfache Entnahme der Spannzange durch eine Kippbewegung erfolgen. Die Haltekraft der lösbaren Rastverbindung wird überwunden, wobei die lösbare Rastverbindung kurzzeitig in eine Entriegelungs- oder Freigabeposition übergeführt wird. Durch die Ausgestaltung der lösbaren Rastverbindung ist ermöglicht, dass sowohl eine elastische Spannzange, welche längsgenutet ist, als auch ein fester Spannzangenkörper, der beispielsweise als Schrumpfkörper zur Aufnahme eines Werkzeugschaftes ausgebildet ist, sowie eine Kegelaufnahme, welche fest mit dem Werkzeug verbunden beziehungsweise aus einem Stück ausgebildet ist, aufgenommen werden kann. Diese erfindungsgemäße Spannmutter ermöglicht somit einen universellen Einsatz und eine selbsthaltende Aufnahme der Spannzange in der Spannmutter für eine Vielzahl verschieden ausgebildeter Spannzangen.

Nach einer vorteilhaften Ausgestaltung der Erfindung ist vorgesehen, dass die lösbare Rastverbindung ein federgelagertes Rastelement umfasst. Dadurch kann ohne Betätigung von zusätzlichen Elementen ein Rast- oder Klicksystem oder -verbindung vorgesehen sein, welche in der Handhabung einfach und sicher ist. Durch eine Verschiebebewegung eines Rastelementes wird ein begrenzter Umfang oder eine Strecke des Aufnahmebereiches für die Spannzange freigegeben, so dass die Spannzange eingesetzt oder aus der Spannmutter entfernt werden kann.

Das federgelagerte Rastelement ist bevorzugt als Kugel ausgebildet. Dadurch ist ein einfaches Einsetzen und eine gute Entnahme der Spannzange aus der Halteposition zur Spannmutter ermöglicht. Alternativ kann vorgesehen sein, dass ein Rastbolzen ausgebildet ist. Dieser weist bevorzugt zumindest eine Schräge auf. Diese Schräge dient bevorzugt zur einfachen Entnahme der Spannzange aus der Spannmutter. Beim Einsetzen der Spannzange greift ein Innenkonus der Spannzange an dem Rastbolzen an, so dass dadurch bereits eine Einführschräge ausgebildet ist.

Die Haltekraft der Rastelemente zur Positionierung der Spannzange zur Spannmutter ist bevorzugt durch die Federkraft, den Federweg und/oder den Eingriffsbereich des Rastelementes in eine Nut der Spannzange bestimmt. Die Haltekraft ist bevorzugt derart ausgelegt, dass nur durch eine bewusste Betätigung der Spannzange ein Lösen aus der Halteposition zur Spannmutter ermöglicht ist.

Nach einer alternativen Ausgestaltung der Erfindung ist vorgesehen, dass die lösbare Rastverbindung durch einen elastischen Spannkörper ausgebildet ist. Dies kann beispielsweise durch ein Federelement vorgesehen sein, welches zumindest teilweise in eine Nut der Spannzange eingreift. Dieses Federelement kann in Form eines Federringes oder Spannringes ausgebildet sein. Das Einsetzen und Lösen der Spannzange kann durch an dem elastischen Spannkörper vorgesehene Schrägen erfolgen oder durch eine manuelle Betätigung des Spannkörpers unterstützt werden, indem dieses Spannelement für kurze Zeit während dem Einsetzen der Spannzange in einer Halteposition außerhalb einer Eingriffsposition angeordnet ist. Bevorzugt ist der Spannkörper selbsthaltend in einer Eingriffsposition in der Spannmutter angeordnet.

Nach einer weiteren vorteilhaften Ausgestaltung der Erfindung ist vorgesehen, dass die lösbare Rastverbindung als ein gegen eine Rückstellkraft betätigbarer Schieber oder Riegel ausgebildet ist. Dieser Schieber oder Riegel kann manuell betätigt werden, wobei die Entriegelungsrichtung radial und/oder tangential nach außen verläuft. Die Betätigungsrichtung zum Entriegeln kann entgegengesetzt sein oder auch abweichend hiervon eingeleitet werden. Eine Rückstellkraft wird bevorzugt über ein Federelement aufgebracht, so dass eine sichere Aufnahme der Spannzange zur Spannmutter während dem Einsetzen und Lösen eines Werkzeuges gegeben ist. Alternativ kann auch eine einrastende Endlage des Schiebers oder Riegels zur Spannmutter vorgesehen sein, die durch eine Betätigung gelöst wird.

Die als Schieber oder Riegel ausgebildete lösbare Rastverbindung weist bevorzugt eine Einführschräge auf, so dass ein erleichtertes Einsetzen der Spannzange und manuelle Betätigung des Schiebers oder Riegels ermöglicht ist.

Die an der Spannmutter angeordneten Ausziehlappen sind nach einer ersten Ausführungsform der Erfindung exzentrisch in einem Spannzangenaufnahmebereich der Spannmutter eingearbeitet. Diese Ausziehlappen umfassen beispielsweise einen Winkelbereich zwischen 30° und 60°. Dies ermöglicht einerseits ein leichtes Einsetzen beziehungsweise Hintergreifen der Ausziehlappen durch die Nut an der Spannzange und andererseits ein sicheres Lösen der Spannzange aus einer Spannzangenaufnahme, bei der eine Selbsthemmung zwischen der Spannzangenaufnahme und der Spannzange zu überwinden ist.

Nach einer alternativen Ausführungsform der Ausziehlappen ist vorgesehen, dass diese durch zumindest einen radial zur Spannzangenaufnahme angeordneten Stift ausgebildet ist. Dadurch kann das Herstellen von einem exzentrisch angeordneten Ausziehlappen durch radiale Bohrungen und Einsetzen von Pressstiften oder eingeschraubten Stiften vereinfacht sein. Dadurch kann ein Haltebereich der Spannmutter ermöglicht sein, bei welcher der Ausziehlappen und die zumindest eine lösbare Rastverbindung in einfacher Form in einer Stufenbohrung angeordnet sind.

Das Einsetzen einer Spannzange in den Spannzangenaufnahmebereich der Spannmutter erfolgt durch das Anordnen einer Nut der Spannzange zum Ausziehlappen, wobei im Anschluss durch eine Schwenkbewegung die Spannzange in eine Halteposition zur Spannmutter bewegt wird und nach dem Einrasten der lösbaren Rastverbindung in der Nut der Spannzange in der Halteposition gehalten ist. Bei der Aufnahme der Spannzange durch die Spannmutter ist lediglich erforderlich, dass die Halteposition der Spannzange in der Spannmutter gesichert ist, ohne dass eine definierte Anlage, wie beispielsweise eines Innenkonus der Spannzange, an einem entsprechenden Konus der Spannmutter erforderlich ist. Deshalb ist ausreichend, wenn das zumindest eine Rastelement geringfügig in die Nut der Spannzange eingreift, um im Zusammenwirken mit dem Ausziehlappen ein selbständiges Lösen oder Herauskippen aus der Spannmutter zu verhindern.

Nach einer weiteren alternativen Ausführungsform der Erfindung ist vorgesehen, dass die lösbare Rastverbindung zumindest ein als Kugel ausgebildetes Rastelement aufweist, welches durch eine Keilfläche oder Schräge in einer Halteposition zum Eingriff in eine Nut einer Spannzange positioniert ist, die in einem Spannzangenaufnahmebereich der Spannmutter vorgesehen ist. Durch die Keilfläche kann das Rastelement in einer Eingriff- beziehungsweise Halteposition übergeführt werden, durch welche ein sicheres Positionieren der Spannzange zur Spannmutter ermöglicht ist. Andererseits ist die Keilfläche derart ausgebildet, dass in einer Löseposition das Rastelement außerhalb der Nut der Spannzange positionierbar ist, so dass die Spannzange aus der Spannmutter zum Auswechseln lösbar ist. Die Ausführungsform eines solchen lösbaren Rastelementes in Verbindung mit einer Keilfläche kann einzeln oder mehrfach in Kombination mit einem Ausziehlappen vorgesehen sein. Ebenso kann als eine weitere erfindungsgemäße Ausführungsform vorgesehen sein, dass zumindest zwei solcher lösbaren Rastelemente mit jeweils einer dem Rastelement zugeordneten Keilfläche an der Spannmutter vorgesehen sind und in die Nut der Spannzange eingreifen, so dass die Spannzange aus der Spannzangenaufnahme herauslösbar ist und nach dem Überführen der Keilflächen in eine Löseposition die Spannzange auswechselbar zur Spannmutter gehalten ist.

Nach einer weiteren alternativen Ausführungsform der Erfindung ist vorgesehen, dass die zumindest eine Keilfläche an einem drehbar zur Spannmutter gelagerten Ring vorgesehen ist. Dadurch kann eine kompakte Bauweise erhalten bleiben. Gleichzeitig ist durch eine einfache Drehbewegung ein Verriegeln und Entriegeln beziehungsweise ein Überführen des Rastelementes in die Halteposition und in eine Löseposition ermöglicht.

Nach einer alternativen Ausgestaltung der Erfindung ist vorgesehen, dass die zumindest eine Keilfläche durch einen axial zur Spannmutter verschiebbaren Ring vorgesehen ist. Dadurch kann durch eine Axialbewegung die Keilfläche ein Überführen des Rastelementes aus einer Halteposition in eine Löseposition oder umgekehrt bewirken. Vorzugsweise ist vorgesehen, dass nach dem Überführen des zumindest einen Rastelementes in die Halteposition eine zumindest geringfügige Drehung des Ringes zum Verriegeln oder Sichern der Löseposition vorgesehen ist. Die Axial- und Drehbewegung des Ringes kann auch überlagert sein.

Der zur Spannmutter bewegbare Ring ist nach der Montage außerhalb einer Montageposition zwischen einer Halteposition und Löseposition bewegbar. Dadurch wird eine sichere Funktion ermöglicht. Beispielsweise wird nach dem Überführen des Ringes aus einer Montageposition in eine Löse- oder Halteposition ein Sicherungsstift oder dergleichen eingesetzt, um diese Montageposition zu sperren.

Vorteilhafterweise ist vorgesehen, dass zumindest der Ring in einer Halteposition selbsthaltend vorgesehen ist. Durch diese Sicherung wird ermöglicht, dass ohne weitere Betätigung ein einfaches Abziehen der Spannzange aus der Spannzangenaufnahme nach dem Lösen der Spannmutter ermöglicht ist.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittdarstellung einer Spannmutter mit einer darin angeordneten Spannzange,
- Figur 2: eine schematische Draufsicht auf eine Spannmutter mit Spannzange gemäß Figur 1,
- Figur 3: eine schematische Draufsicht auf eine alternative Ausführungsform einer lösbaren Rastverbindung,
- Figur 4: eine schematische Schnittdarstellung einer alternativen Ausführungsform einer Spannmutter mit einer darin angeordneten Spannzange,
- Figur 5: eine schematische Draufsicht auf die Ausführungsform gemäß Figur 4 und
- Figur 6: eine schematische Schnittdarstellung einer weiteren alternativen Ausführungsform einer Spannmutter mit einer darin angeordneten Spannzange.

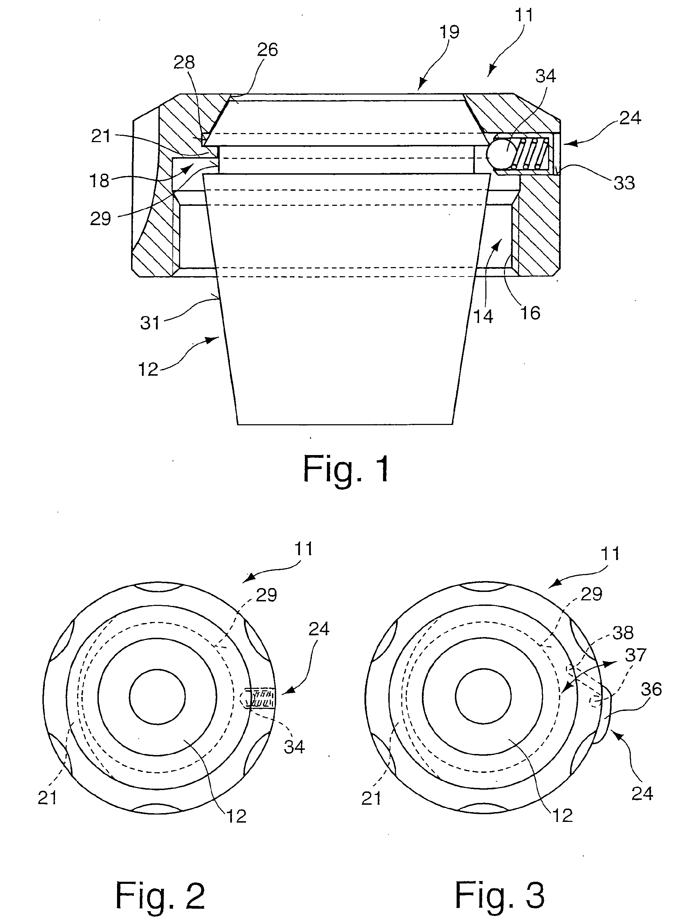

In Figur 1 ist schematisch eine Schnittdarstellung einer erfindungsgemä-βen Spannmutter 11 mit einer darin eingesetzten Spannzange 12 dargestellt. Die Spannmutter 11 umfasst einen zentral angeordneten Spannzangenaufnahmebereich 14, der einen Gewindeabschnitt 16 aufweist, um die Spannmutter 11 auf einer nicht näher dargestellten Spannzangenaufnahme zu fixieren. Oberhalb des Gewindeabschnitts 16 ist ein Haltebereich 18 ausgebildet, durch den die Spannzange 12 lösbar, jedoch in einer Halteposition 19 positioniert zur Spannmutter 11, gehalten ist. Der Haltebereich 18 umfasst einen Ausziehlappen 21, der exzentrisch in dem Spannzangenaufnahmebereich 14 angearbeitet ist. Die Größe des Ausziehlappens 21 ist beispielsweise in der Draufsicht in Figur 2 strichliniert dargestellt. Der Haltebereich 18 umfasst des Weiteren im oder nahe der Radialebene, in der der Ausziehlappen 21 angeordnet ist, zumindest eine lösbare Rastverbindung 24. Oberhalb des Haltebereiches 18 ist ein Außenkonus 26 an der Spannmutter 11 vorgesehen, durch den die Spannzange 12 in axialer Richtung gehalten ist.

Die Spannzange 12 umfasst einen an dem Außenkonus 26 der Spannmutter 11 anliegenden Innenkonus 28. An diesen Innenkonus 28 schließt sich eine umlaufende Nut 29 oder Rille an. Über diese Nut 29 ist die Spannzange 12 fixiert zur Spannmutter 11 gehalten. Ein Konus 31 der Spannzange 12 greift in die nicht näher dargestellte Spannzangenaufnahme ein.

Die lösbare Rastverbindung 24 gemäß den Figuren 1 und 2 ist beispielsweise durch ein mit Federkraft beaufschlagtes Rastelement 34, insbesondere in Form einer Kugel, ausgebildet. Diese lösbare Rastverbindung 24 kann als komplettes Bauteil in eine Radialbohrung 33 eingesetzt und bevorzugt über ein Gewinde gehalten werden. Dadurch ist gleichzeitig ermöglicht, dass eine Feinjustierung der lösbaren Rastverbindung 24 in der Position zur Spannzange 12 gegeben ist. Die lösbare Rastverbindung 24 liegt bevorzugt dem Ausziehlappen 21 mit seiner größten radialen Erstreckung zur Achsmitte gegenüber. Dadurch kann zum einen nach dem Einsetzen der Nut 29 am Ausziehlappen 21 ein maximales Kippmoment zum Einrasten der Spannzange 12 an der lösbaren Rastverbindung 24 ermöglicht sein und zum anderen mit einer minimalen Anzahl an Bauteilen eine sichere Fixierung erzielt werden. Alternativ kann vorgesehen sein, um beispielsweise eine erhöhte Rastkraft vorzusehen, dass mehrere lösbare Rastverbindungen 24 in dem Haltebereich 18 in die Nut 29 eingreifen. Die lösbaren Rastverbindungen 24 können in einem Bereich vorgesehen sein, den der Ausziehlappen 21 umfasst. Ebenso können die Abstände zueinander variiert werden, um eine optimale Haltekraft zu erzielen. Ebenso kann eine Erhöhung der Federkraft als Einstellparameter sowie der Federweg und die Form des Rastelementes 34 eine Haltekraft beeinflussen. Alternativ kann die lösbare Rastverbindung 24 durch eine Radialbohrung ausgebildet sein, in welche ein Rastelement 34 und eine Feder eingesetzt wird und durch einen Gewindestift gehalten ist.

Alternativ zu der in den Figuren 1 und 2 dargestellten lösbaren Rastverbindung 24 können elastische Spannkörper, wie beispielsweise Federn, Spannfedern, ringförmige Federelemente oder aus elastisch nachgiebigem Vollmaterial bestehende Körper vorgesehen sein. Diese können in einer festen Anordnung oder verschiebbaren Anordnung vorgesehen sein, um das Einsetzen und Lösen der Spannzange 12 zur Spannmutter 11 zu ermöglichen.

In Figur 3 ist eine alternative Ausgestaltung einer lösbaren Rastverbindung 24 dargestellt. Diese Ausführungsform umfasst einen Riegel 36, der durch eine manuelle Betätigung aus einer Verriegelungsposition in eine Entriegelungsposition überführbar ist. Der Riegel 36 wird um eine Drehachse 37, die parallel zur Rotationsachse verläuft, geschwenkt, um einen Verriegelungsabschnitt 38 außer Eingriff zur Nut 29 der Spannzange 12 zu bewegen. Durch eine Federkraft oder Rückstellkraft kehrt der Riegel 36 selbständig in eine Verriegelungsposition zurück. An seiner zum Gewindeabschnitt 16 der Spannmutter 11 weisenden Fläche ist eine Einführschräge vorgesehen, so dass bei einer Kippbewegung der Innenkonus 28 der Spannzange 12 an der Einführschräge zur Auslenkung des Riegels 36 und einem leichten Positionieren der Spannzange 12 entlang gleitet. Der Riegel 36 kann alternativ zum Einsetzen und Lösen der Spannzange 16 in der Spannmutter 11 betätigt werden. In einer in die Nut 29 eingreifenden Ruhelage ist der Riegel 36 in einer eingerasteten Position gesichert.

Die durch das Einbringen der lösbaren Rastverbindung 24 entstehende Unwucht wird durch entsprechende Materialabtragungen am Körper der Spannmutter 11 ausgeglichen.

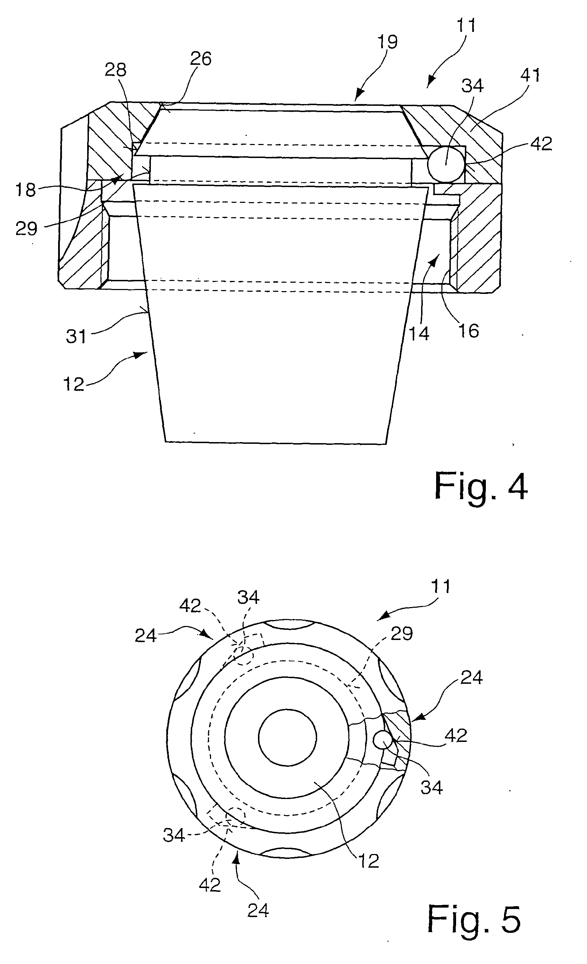

In Figur 4 ist eine schematische Schnittdarstellung einer alternativen Ausführungsform dargestellt. Die Spannmutter 11 ist zweiteilig ausgebildet und umfasst einen drehbar zur Spannmutter gelagerten Ring 41, durch welchen das Rastelement 34 aus einer Löseposition in eine Halteposition 19, wie dies in Figur 4 dargestellt ist, überführbar ist. Die zumindest eine lösbare Rastverbindung 24 umfasst das Rastelement 34 sowie eine dem Rastelement 34 zugeordnete und am Ring 41 angeordnete Keilfläche 42, durch welche aufgrund einer Drehung des Ringes 41 das Rastelement 34 zum Eingriff in die Nut 29 einer in die Spannmutter 11 eingesetzten Spannzange 12 kommt. Die Halteposition 18 ist somit eingenommen. Durch Überführen des Ringes 41 in eine Löseposition wird ein Verschiebeweg des Rastelementes 34 freigegeben, so dass das Rastelement 34 außerhalb der Nut 29 anordenbar ist.

In Figur 5 ist eine Draufsicht auf die Ausführungsform gemäß Figur 4 dargestellt. Beispielsweise umfasst der Ring 41 drei lösbare Rastverbindungen, die bevorzugt gleichmäßig über den Umfang verteilt vorgesehen sind. Durch eine Drehbewegung um wenige Winkelgrade können die lösbaren Rastverbindungen 24 gemeinsam oder nacheinander in Eingriff oder außer Eingriff kommen. Dadurch wird ein einfaches Lösen und Befestigen von Spannzangen 12 unterschiedlicher Ausführungsformen ermöglicht.

Der Ring 41 wird beispielsweise über radial nach außen stehende Ringsegmente an der der Spannmutter 11 niedergehalten, so dass die während dem Lösen der Spannzange 12 aus der Spannzangenaufnahme entstehenden Kräfte aufgenommen werden können. Zwischen den radial nach außen stehenden Halteabschnitten sind Lücken vorgesehen, welche zum Einsetzen des Ringes 41 zur Spannmutter 11 dienen. Nach dem Einsetzen des Ringes 41 auf der Spannmutter 11 ist diese Montageposition gesperrt, wodurch der Ring 41 zwischen einer Löse- und Halteposition verdrehbar vorgesehen ist.

Dieser Ring 41 mit der lösbaren Rastverbindung 24, welche zumindest eine Keilfläche 42 umfasst, kann auch mit einem Ausziehlappen 21 gemäß den Figuren 1 bis 3 kombiniert werden.

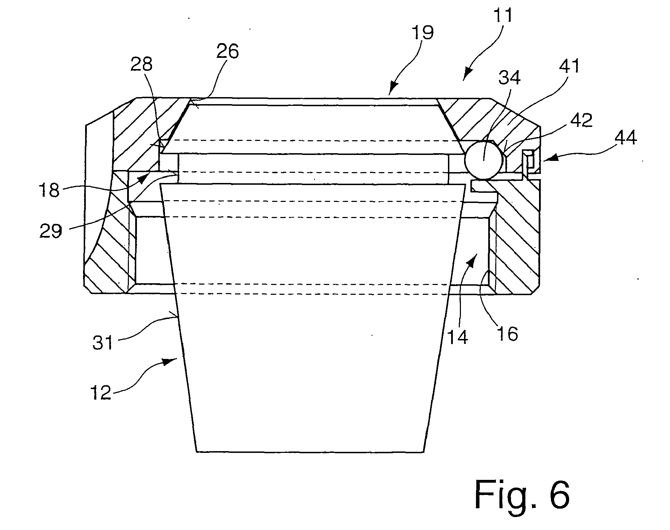

In Figur 6 ist eine alternative Ausführungsform zu Figur 5 dargestellt. Das Prinzip der lösbaren Rastverbindung 24 ist beibehalten. Anstelle einer Drehbewegung des Ringes 41 erfolgt eine axiale Verschiebung des Ringes 41, um das Rastelement 34 aus einer Halteposition in eine Löseposition und umgekehrte überzuführen. Beispielsweise sind in Figur 6 Führungselemente 44 dargestellt, welche den Ring 41 in Axialrichtung verschiebbar aufnehmen. Die Funktion und Ausführungsform entspricht im Übrigen der Ausführungsform gemäß den Figuren 4 und 5.

Die erfindungsgemäße lösbare Rastverbindung kann bei Spannmuttern gemäß der DIN 6499-B als auch der DIN 6388 vorgesehen sein.

Die vorgenannten Merkmale sind jeweils für sich erfindungswesentlich und können beliebig miteinander kombinierbar sein.

## Patentansprüche

1. Spannmutter zur auswechselbaren Aufnahme einer Spannzange (12) mit einem Ausziehlappen (21) zum Lösen der Spannzange (12) aus einer Spannzangenaufnahme, **dadurch gekennzeichnet, dass** dem Ausziehlappen (21) zumindest eine lösbare Rastverbindung (24) zur Fixierung der Spannzange (11) in einer Halteposition (19) im Spannzangenaufnahmebereich (14) zugeordnet ist.

2. Spannmutter nach Anspruch 1, **dadurch gekennzeichnet, dass** die lösbare Rastverbindung (24) ein federgelagertes Rastelement (34) aufweist.

3. Spannmutter nach Anspruch 2, **dadurch gekennzeichnet, dass** das Rastelement (34) als Kugel oder als ein Rastbolzen mit zumindest einer Einführschräge ausgebildet ist.

4. Spannmutter nach einem der vorhergehenden Ansprüche, **dadurch gekennzeichnet, dass** die Haltekraft der lösbaren Rastverbindung (24) durch eine Federkraft, einen Federweg und/oder einen Eingriffsbereich eines Rastelementes (34) in eine Nut (29) der Spannzange (11) bestimmt ist.

5. Spannmutter nach Anspruch 1, **dadurch gekennzeichnet, dass** die lösbare Rastverbindung (24) einen elastischen Spannkörper umfasst.

6. Spannvorrichtung nach Anspruch 1, **dadurch gekennzeichnet, dass** die lösbare Rastverbindung (24) als ein gegen eine Rückstellkraft betätigbarer Schieber oder Riegel (36) ausgebildet ist.

7. Spannmutter nach Anspruch 6, **dadurch gekennzeichnet, dass** der Schieber oder Riegel (36) eine Einführschräge zum Einsetzen der Spannzange (11) aufweist.

8. Spannmutter nach einem der vorhergehenden Ansprüche, **dadurch gekennzeichnet, dass** der Ausziehlappen (21) exzentrisch an einem Spannzangenaufnahmebereich (14) eingearbeitet ist.

9. Spannmutter nach einem der Ansprüche 1 bis 7, **dadurch gekennzeichnet, dass** der Ausziehlappen (21) durch zumindest einen radial zum Spannzangenaufnahmebereich (18) angeordneten Stift ausgebildet ist.

10. Spannmutter nach einem der vorhergehenden Ansprüche, **dadurch gekennzeichnet, dass** eine Spannzange (11) mit einer daran angeordneten Nut (29) beim Einsetzen in den Spannzangenaufnahmebereich (14) an dem Ausziehlappen (21) angreift und durch eine Schwenk- oder Kippbewegung nach dem Einrasten der Nut (29) an der zumindest einen lösbaren Rastverbindung (21) in der Halteposition (18) gehalten ist.

11. Spannvorrichtung nach Anspruch 1, **dadurch gekennzeichnet, dass** die lösbare Rastverbindung (24) zumindest ein als Kugel ausgebildetes Rastelement (34) aufweist, welches durch eine dem zumindest einen Rastelement (34) zugeordnete Keilfläche (42) oder Schräge in eine Halteposition zum Eingriff in eine Nut (29) einer Spannzange (12) positionierbar ist.

12. Spannvorrichtung nach Anspruch 11, **dadurch gekennzeichnet, dass** die zumindest eine Keilfläche (42) an einem drehbar zur Spannmutter (11) gelagerten Ring (41) vorgesehen ist.

13. Spannvorrichtung nach Anspruch 11, **dadurch gekennzeichnet, dass** die zumindest eine Keilfläche (42) an einem in Axialrichtung verschiebbar gelagerten Ring (41) zur Spannmutter (11) vorgesehen ist, der vorzugsweise in einer Endlage durch eine radiale Drehung gesichert ist.

14. Spannvorrichtung nach einem der Ansprüche 11 bis 13, **dadurch gekennzeichnet, dass** der Ring (41) nach der Montage zur Spannmutter (11) außerhalb einer Montageposition zwischen einer Halteposition und einer Lageposition bewegbar ist.

15. Spannvorrichtung nach Anspruch 14, **dadurch gekennzeichnet, dass** der Ring (41) zumindest in einer Halteposition selbsthaltend vorgesehen ist.
